(19) **Europäisches Patentamt / European Patent Office / Office européen des brevets**

(11) **EP 2 558 179 B1**

(12) **EUROPEAN PATENT SPECIFICATION**

(45) Date of publication and mention of the grant of the patent:
**05.08.2020 Bulletin 2020/32**

(51) Int Cl.:
**B01D 17/02** (2006.01)  **C02F 1/40** (2006.01)
**C02F 1/36** (2006.01)

(21) Application number: **11769474.5**

(22) Date of filing: **12.04.2011**

(86) International application number:
**PCT/US2011/032181**

(87) International publication number:
**WO 2011/130321 (20.10.2011 Gazette 2011/42)**

(54) **USE OF ULTRASOUND AND ACOUSTOPHORESIS TECHNOLOGY FOR SEPARATION OF PARTICULATES FROM A HOST MEDIUM**

VERWENDUNG VON ULTRASCHALL- UND AKUSTOPHORESETECHNOLOGIE ZUR TRENNUNG VON PARTIKELN AUS EINEM TRAGENDEN MEDIUM

UTILISATION DE LA TECHNOLOGIE ULTRASONORE ET D'ACOUSTOPHORÈSE POUR LA SÉPARATION DE PARTICULES D'UN MILIEU HOTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2010 US 342307 P**

(43) Date of publication of application:
**20.02.2013 Bulletin 2013/08**

(73) Proprietor: **Flodesign Sonics Inc.**
**Wilbraham, MA 01095 (US)**

(72) Inventors:
• **DIONNE, Jason**
**Simsbury**
**CT 06070 (US)**
• **LIPKENS, Bart**
**Hampden**
**MA 01036 (US)**
• **RIETMAN, Edward, A.**
**Nashua**
**NH 03063 (US)**

(74) Representative: **Kador & Partner PartG mbB**
**Corneliusstraße 15**
**80469 München (DE)**

(56) References cited:
EP-A1- 1 254 669     WO-A2-03/102737
GB-A- 2 420 510     US-A- 4 759 775
US-A- 5 225 089     US-A1- 2007 272 618

• 'Droplet transport and coalescence kinetics in emulsions subjected to acoustic fields' ULTRASONICS vol. 46, 2007, pages 289 - 302, XP022308457
• 'An industrial-prototype acoustic array for real-time emulsion layer detection in oil storage tanks' IEEE SENSORS JOURNAL vol. 9, no. 12, 2009, pages 1838 - 1846, XP011278838
• 'Enhanced acoustic separation of oil-water emulsion in resonant cavities' THE OPEN ACOUSTICS JOURNAL vol. 1, 2008, pages 66 - 71, XP008166677
• 'The effect of frequency sweeping and fluid flow on particle trajectories in ultrasonic standing waves' IEEE SENSORS JOURNAL vol. 8, no. 6, 2008, pages 667 - 677, XP011215548

**Description**

**FIELD OF THE DISCLOSURE**

The subject matter described herein relates to the use of ultrasonically generated acoustic standing waves to achieve trapping, concentration, and separation of particulates and thereby remove such contaminants from a host medium such as water.

**BACKGROUND OF THE DISCLOSURE**

This invention relates in general to the use of ultrasound to achieve separation and concentration of particulates from host medium. The ability to translate and concentrate these particulates is known as acoustophoresis.

Acoustophoresis is a low-power, no-pressure-drop, no-clog, solid-state approach to particle, or oil droplet (<10 micron), removal from fluid dispersions; it is an extremely powerful in that it can be used to sort particles of different sizes, density, or compressibility in a single pass through an acoustophoretic cavity.

What is needed is a system that can process large quantities of host medium that is laden with particulates. What is needed is a system that can concentrate and separate these particulates from the host medium. Patent application WO 03102737 A3 discloses fluid-handling methods and devices for ultrasonic manipulation of fluid-borne particles comprise a fluid-handling manifold and an ultrasonic particle manipulator defining an ultrasonic cavity within the manifold. Fluid-borne particles introduced into the manifold are manipulated by controlling ultrasonic standing waves at the ultrasonic cavity. Cavities having non-uniform configurations, asymmetric standing waves and/or multiple ultrasonic cavities within the manifold are operative to control the movement of the fluid-borne particles, optionally including collecting and holding such particles, transferring particles through an intersection from one channel to another.

*Physics of Acoustophoresis*

Acoustophoresis is the separation of a second phase (or phases) from a host fluid using sound pressure to create the driving force. An ultrasonic transducer operating at a fixed frequency f (Hz) is used to set up an acoustic standing wave in a fluid-filled cavity. The standing wave is characterized by a local pressure $p$ that is a function of position (x) and time ($t$),

$$p(x,t) = P\cos(kx)\sin(\omega t), \quad (1)$$

where $P$ is the amplitude of the acoustic pressure; $k$ is the wave number (equal to $2\pi/\lambda$, where $\lambda$ is the wavelength), and $\omega=2\pi f$, where $\omega$ is the angular frequency. The pressure of the acoustic wave produces an acoustic radiation force $F_{ac}$ on secondary-phase elements according to

$$F_{ac} = X\pi R_p^{3} k \frac{P^2}{\rho_f c_f^{2}} \sin(2kx), \quad (2)$$

where R, is the particle radius, $\rho_f$ is the density of the fluid medium, $c_f$ is the speed of sound in the fluid, and $X$ is the acoustic contrast factor, defined by

$$X = \frac{1}{3}\left[\frac{5\Lambda - 2}{1 + 2\Lambda} - \frac{1}{\sigma^2 \Lambda}\right], \quad (3)$$

where A is the ratio of the particle density to fluid density and o is the ratio of the speed of sound in the particle to the sound speed in the fluid. The acoustic radiation force acts in the direction of the acoustic field. The acoustic radiation force is proportional to the product of acoustic pressure and acoustic pressure gradient. An inspection of the acoustic radiation force shows that it is proportional to the particle volume, frequency (or wavenumber), the acoustic energy density (or the square of the acoustic pressure amplitude), and the acoustic contrast factor. Note also that the spatial dependency has twice the periodicity of the acoustic field. The acoustic radiation force is thus a function of two mechanical properties, namely density and compressibility.

Table 1. Properties of water and 4 selected secondary phases.

| Material | $\rho$ (density ) (kg/m$^3$) | c (speed of sound in the medium) (m/s) | $\Lambda$ (dimensionless ) | X (dimensionless ) |
|---|---|---|---|---|
| Water | 1000 | 1509 | - | - |
| Hexanes | 720 | 1303 | 1.39 | +0.257 |
| Blood Cells | 1125 | 1900 | 0.89 | -0.30 |
| Bacterial Spores | 1100 | 1900 | 0.91 | -0.28 |
| Magnetic beads | 2000 | 1971 | 0.5 | -1.054 |

For three dimensional acoustic fields, a more general approach for calculating the acoustic radiation force is needed. Gor'kov's formulation can be used for this [5]. Gor'kov developed an expression for the acoustic radiation force $F_{ac}$ applicable to any sound field. The primary acoustic radiation force is defined as a function of a field potential U, given by

$$F_{ac} = -\nabla(U) \quad (4)$$

where the field potential U is defined as

$$U = V_0 \left[ \frac{\langle p^2(x,y,t) \rangle}{2\rho_f c_f^2} f_1 - \frac{3\rho_f \langle v^2(x,y,t) \rangle}{4} f_2 \right], \quad (5)$$

and f$_1$ and f$_2$ are the monopole and dipole contributions defined by

$$f_1 = 1 - \frac{1}{\Lambda \sigma^2},$$
$$f_2 = \frac{2(\Lambda - 1)}{2\Lambda + 1}, \quad (6)$$

where p(x,y,z,t) is the acoustic pressure and v(x,y,z,t) is the fluid particle velocity. $V_0$ is the volume of the particle.

In addition, there is no report in the literature on the use of acoustophoretic trapping of particles against a fluid drag force in large-scale flow channels. Large-scale is used to indicate that the cross sectional dimensions of the flow channels are typically much larger than (by several or more multiples of) the wavelength of the sound wave generated by the ultrasonic transducer.

The foregoing description of related art is not intended in any way as an admission that any of the documents described therein, including pending United States patent applications, are prior art to embodiments of the present disclosure. Moreover, the description herein of any disadvantages associated with the described products, methods, and/or apparatus, is not intended to limit the disclosed embodiments. Indeed, embodiments of the present disclosure may include certain features of the described products, methods, and/or apparatus without suffering from their described disadvantages.

This application references a number of different publications as indicated throughout the specification by one or more reference numbers within brackets, e.g., [x]. A list of these different publications ordered according to these reference numbers can be found below in the section entitled "References." Each of these publications is incorporated by reference herein.)

## SUMMARY OF THE DISCLOSURE

This invention relates to the use of ultrasound and acoustophoresis to concentrate and separate particulates from host medium.

According to some embodiments not belonging to the invention, there is provided a system to concentrate and separate gas, lipids, and/or oil from water comprising: a flow chamber, through which the emulsion of water and microscopic oil droplets or lipids flows, the flow chamber comprising one or more flow inlets and flow outlets, with typical dimensions of macro-scale size, meaning the dimensions of the cross-section of the flow chamber are much larger than the wavelength corresponding to the generated sound; an ultrasonic transducer, typically embedded in the wall of said flow chamber, and typically made of a piezo-electric material, which is driven by an oscillating voltage signal of ultrasonic frequencies, typically in the range of hundred thousand to several million cycles per second, with amplitudes of tens of volts; and a reflector, which is typically located opposite to the transducer, such that an acoustic standing wave is generated in the host medium, typically perpendicular, i.e., vertical, to the direction of the mean flow in the flow channel; where the acoustic field exerts an acoustic radiation force, i.e., acoustophoretic force, on the secondary phase component, i.e., oil droplets or lipids, such that the oil droplets are trapped in the acoustic field against the fluid drag force, resulting in large scale collection of the secondary phase component (e.g., lipids, gases, oils). The secondary phase component may be removed by conventional means, for example, harvesting of this oil layer by conventional means.

According to some embodiments not belonging to the invention, there is provided a system to concentrate and separate lipids or oil phase from an oil/water or lipidlwater emulsion comprising: a flow chamber through which the emulsion of water and microscopic oil droplets or lipids flows, the flow chamber comprising one or more flow inlets and flow outlets, wherein the dimensions of the cross-section of the flow chamber are larger (e.g., 2X, 4X, 5X, 10X, 20X, 50X, 100X larger) than the wavelength corresponding to the generated sound; an ultrasonic transducer, wherein the ultrasonic transducer is driven by an oscillating voltage signal of ultrasonic frequencies; and a reflector, wherein the reflector is located such that an acoustic standing wave is generated in the host medium; wherein a acoustic field exerts an acoustic radiation force on a secondary phase component containing oil droplets or lipids, such that the oil droplets are trapped in the acoustic field against the fluid drag force, resulting in large scale collection of the secondary phase component over time; and where the rapid collection of oil droplets results in agglomeration of the oil droplets or the formation of large aggregates of microscopic oil droplets, such that the buoyancy force of the droplet aggregates is sufficient to force the oil droplet aggregates to float to the top of the flow chamber, such that over time an oil layer, representing all collected oil droplets, accumulates at the top of the flow chamber; and where conventional means can be used for harvesting of this oil layer.

According to some embodiments not belonging to the invention, there is provided a system to concentrate and separate contaminating gases from water comprising: a flow chamber through which water containing contaminating gases flows, the flow chamber comprising one or more flow inlets and flow outlets, wherein the dimensions of the cross-section of the flow chamber are larger (e.g., 2X, 4X, 5X, 1 OX, 20X, 50X, 100X larger) than the wavelength corresponding to the generated sound; an ultrasonic transducer, wherein the ultrasonic transducer is driven by an oscillating voltage signal of ultrasonic frequencies; and a reflector, wherein the reflector is located such that an acoustic standing wave is generated in the host medium; wherein a acoustic field exerts an acoustic radiation force on a secondary phase component containing contaminating gases, such that the gases are trapped in the acoustic field against the fluid drag force, resulting in large scale collection of the secondary phase component over time; and where the rapid collection of gases results in agglomeration of the gases, such that the buoyancy force of the gas is sufficient to force the gas to float to the top of the flow chamber, such that over time gas accumulates at the top of the flow chamber; and where conventional means can be used for harvesting of the gas.

According to some embodiments of the invention, there is provided the use of a system to concentrate and separate particulates with greater density than water comprising: a flow chamber through which water containing contaminating particulates flows, the flow chamber comprising one or more flow inlets and flow outlets, wherein the dimensions of the cross-section of the flow chamber are larger (e.g., 2X, 4X, 5X, 1 OX, 20X, 50X, 100X larger) than the wavelength corresponding to the generated sound; an ultrasonic transducer, wherein the ultrasonic transducer is driven by an oscillating voltage signal of ultrasonic frequencies; and a reflector, wherein the reflector is located such that an acoustic standing wave is generated in the host medium; wherein a acoustic field exerts an acoustic radiation force on the particulates, such that the particulates are trapped in the acoustic field against the fluid drag force, resulting in large scale collection of the secondary phase component over time; and where the rapid collection of particulates results in agglomeration of the particulates, such that the gravitational force of the particulate aggregates is sufficient to force the particulate aggregates to sink to the bottom of the flow chamber, such that over time a particulate layer, representing all collected particulates, accumulates at the bottom of the flow chamber; and where conventional means can be used for harvesting of this particulate layer.

The host medium can be flowed vertically or horizontally through the flow chamber. The fluid can be water. The particulate can be selected from microalgae, yeast, fungi, bacteria, spores, gases or oils, metal oxides, metal particles, clays, dirt, plastics, or any particulate with a non-zero contrast factor. The oscillating, periodic, or pulsed voltage signal of ultrasonic frequencies can be in the range of 10 kHz to 100 MHz.

In some embodiments, the system is driven at a constant frequency of excitation. The system is driven with a frequency sweep pattern where the effect of the frequency sweeping is to translate the collected particulates along the direction of the acoustic standing wave to either the transducer face or to the opposite reflector face. In some embodiments, the system is driven by any type of ultrasonic transducer, other than a piezoelectric transducer.

In some embodiments, the system is oriented in a direction other than with the fluid flow being vertical, where translation of particulates in the direction of the acoustic field can be achieved by a frequency sweeping method.

The system of the present embodiments may be used for bilge water purification. For example, will not only separate water and oil from bilge tanks but will also destroy aquatic hitchhikers or unwanted protozoa that may contaminate fragile natural aquatic ecosystems.

In some embodiments, the flow chamber of the system is oriented in a vertical direction.

In some embodiments, the ultrasonic transducer of the system is embedded in the wall of said flow chamber. In some embodiments, the ultrasonic transducer of the system is driven by an oscillating voltage signal of ultrasonic frequencies in the range of hundred thousand to several million cycles per second, with amplitudes of tens of volts. In some embodiments, the ultrasonic transducer of the system is made of a piezo-electric material.

The reflector of the system is located opposite to the transducer.

The acoustic standing wave is generated in the host medium perpendicular to the direction of the mean flow in the flow channel.

In some embodiments, the acoustic radiation force is an acoustophoretic force.

In some embodiments, walls are not placed around the transducer element in a manner to minimize streaming.

In some embodiments, the dimensions of the cross-section of the flow chamber are 2 to 1000 times larger (e.g., 2X, 4X, 5X, 10X, 20X, 50X, 100X, 200X, 300X, 400X, 500X, 600X, 700X, 800X, 900X larger) than the wavelength corresponding to the generated sound.

Various implementations of the current subject matter can efficiently trap, concentrate, and separate particles from the host medium. Systems, methods, and the like can concentrate and separate oil from water.

Other advantages of the current subject matter can include, but are not limited to, use of acoustophoresis for separations in extremely high volumes and in flowing systems with very high flow rates. Micron-size particles, for which the acoustophoretic force is quite small, can nonetheless be agglomerated into larger particles that are readily removed. Concentration ratios of 1000 or more are possible using a single-pass acoustocollector. Other, larger fluid flow rates are possible using larger scale flow chambers.

An apparatus is described including a flow chamber with an inlet and an outlet through which is flowed a mixture of a fluid and a particulate and two or more ultrasonic transducers embedded in or outside of a wall of said flow chamber. When the two or more ultrasonic transducers are located outside the flow chamber wall the thickness of the flow chamber wall can be tuned to maximize acoustic energy transfer into the fluid. The ultrasonic transducers are arranged at different distances from the inlet of the flow chamber. The ultrasonic transducers can be driven by an oscillating, periodic, or pulsed voltage signal of ultrasonic frequencies. The apparatus also includes two or more reflectors corresponding to each ultrasonic transducer located on the opposite wall of the flow chamber from to the corresponding transducer. Each ultrasonic transducer forms a standing acoustic wave at a different ultrasonic frequency. Each frequency can be optimized for a specific range of particle sizes in the fluid.

The fluid can be flowed horizontally through the flow chamber. The fluid can be water. The particulate can be selected from microalgae, yeast, fungi, bacteria, spores, gases or oils, metal oxides, metal particles, clays, dirt, plastics, or any particulate with a non-zero contrast factor. The oscillating, periodic, or pulsed voltage signal of ultrasonic frequencies can be in the range of 10 kHz to 100 MHz.

The apparatus can contain three, four, five, or more ultrasonic transducers. Each transducer forms a standing acoustic wave at a different ultrasonic frequency and each frequency can be optimized for a specific range of particle sizes in the fluid.

The apparatus can be used to produce two or more acoustic standing waves in the fluid. The standing waves can be perpendicular to the direction of the mean flow in the flow channel. The standing waves can have a horizontal or vertical orientation. The standing waves can then exert acoustic radiation force on the particulate, such that the particulate is trapped in the acoustic field against the fluid drag force. Thus, the particulate (e.g., oil) is concentrated in the acoustic field over time. The frequency of excitation of the standing waves can be constant or be varied in a sweep pattern. The sweep pattern variation can be used to translate the collected particles along the direction of the acoustic standing waves to either the transducer face or to the reflector face.

The apparatus also includes a collection pocket positioned on the wall of the flow chamber opposite of the transducer. The pocket can be planar, conical, curved, or spherical in shape.

The ultrasonic transducer can be made of a piezo-electric material.

The apparatus can also include an additional one or more transducers embedded in the flow channel wall or outside of the vessel wall, with the wall thickness tuned to maximize acoustic energy transfer. For each transducer a reflector is positioned on the opposite wall of the flow chamber. The collection pocket can also have a first door that seals the pocket away from the fluid. The collection pocket can also be connected to a conduit. This conduit can include a second door which prevents entry of fluid from the flow chamber into the conduit when the first door is open.

A method of separating particulate from a fluid is described comprising flowing the fluid past two or more positions; and forming acoustic standing waves at the two or more positions. Each standing acoustic wave can be maintained at a different ultrasonic frequency and each ultrasonic frequency can be optimized for a specific range of particle sizes. The particulate of the optimized size is trapped in its corresponding acoustic standing wave against the flow of the fluid. Thus, the particulate is concentrated in its corresponding acoustic standing wave.

This method can further include sweeping the frequency of the acoustic standing wave thereby directing the concentrated particulate into a collection pocket. The two or more acoustic standing wave can be a pulsed waveform resulting in high intensity acoustic pressure.

The details of one or more variations of the subject matter described herein are set forth in the accompanying drawings and the description below. Other features and advantages of the subject matter described herein will be apparent from the description and drawings, and from the claims.

## BRIEF DESCRIPTION OF THE DRAWINGS

Figure 1 : Photomicrograph of acoustophoretic trapping of the algae Dunaliella salina in flowing water. The transducer is at the top, just out of the image; the column of trapped algae is about 2.5cm high x 1cm wide. The ultrasonic pressure nodes are seen as the horizontal planes in which the algal cells are captured; the water flow is from left to right.

Figure 2: Calculated acoustic force operating on micron-size particles as a function of the particle (or droplet) radius at a frequency of 1 MHz and an acoustic pressure amplitude of 0.5 MPa.

Figure 3: Apparatus, showing flow channels, acoustic transducer, reflective surface, and collection pocket, for the harvesting of microalge through acoustophoretic trapping. The transducer is a 2 MHz PZT-4 transducer. The direction of the fluid flow is horizontal and the direction of the acoustic field is vertical.

Figure 4: Several views of typical embodiments of a system for trapping, concentration, and separation of lipids/biooils from an oil/water emulsion.

Figure 5: Photo (at 400X magnification) of an oil/water emulsion obtained as a result of the cavitation process applied to a suspension of microalgae. Typical oil droplet diameter is on the order of 3 pm.

Figure 6: Photo (at 400X magnification) of a stable emulsion made from 400 ml water, 10 ml baby oil, and four tablets of Ceteareth-20.

Figure 7: Photo of an apparatus for oil concentration and separation. The stable emulsion flows through the region of the acoustic field in a downward vertical direction. The acoustic field is in the horizontal direction.

Figure 8: Series of four photos (at 10X magnification) showing the formation of oil droplet aggregates as a result of the trapping of the oil droplets in the acoustic field. The topmost photograph is the first in the time series. The bigger chain of oil droplets, formed as result of coalescence and agglomeration, has just started to rises as a result of buoyancy, and can be seen completely separated from the smaller line of oil droplets in the final, bottommost photograph.

Figure 9: Photo (10X magnification) of the collected oil layer at the top of the flow chamber as a result of the coalescence, aggregation, and concentration of the oil droplets.

## DETAILED DESCRIPTION OF THE INVENTION

This invention relates to the use of a system to concentrate and separate particulates from a mixture of a host medium and particulates according to claim 1.

Whereas there is a well-established literature on applications of acoustophoresis in microfluidics, our innovation is to use acoustophoresis for separations in extremely high volumes and in flowing systems with very high flow rates. This has been done for micronsize particles, for which the acoustophoretic force is quite small. For example, Bacillus cereus bacterial spores (a model for anthrax) have been trapped at 15% efficiency in an acoustophoretic cavity embedded in a flow system that can process drinking water at rates up to 120mL/minute (I cm/second linear flow) [1]. The concentration ratio has been as high as 1000 in our single-pass, small-scale prototype acoustocollector.

An acoustophoretic separator is created by using a piezoelectric acoustic transducer and an opposing reflection surface (or a second transducer) to set up a resonant standing wave in the fluid of interest. The ultrasonic standing waves create localized regions of high and low pressure, corresponding to high and low density of the fluid. Secondary phase contaminants are pushed to the standing wave nodes (solid particles) or antinodes (oils) depending on their compressibility and density relative to the surrounding fluid. Particles of higher density and compressibility (e.g., bacterial spores) move to the nodes in the standing waves; secondary phases of lower density (such as oils) move to the antinodes. The force exerted on the particles also depends on their size, with larger particles experiencing larger forces.

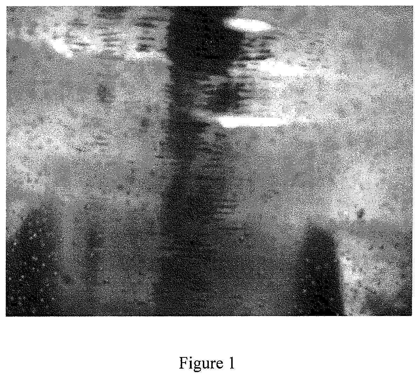

Figure 1 shows the acoutophoretic collection of algae in a flowing water stream. A flat, circular transducer is used in the acoustocollector of Figure 1. The pressure field of this transducer is a Bessel function that has a radial component in addition to the linear standing wave. The radial component acts to hold the captured algae in the column against the fluid flow. The trapped algae are then further concentrated in region by gravitational settling or by being driven to a collector pocket through a slow frequency sweeping method similar to that given in [2, 3, 4].

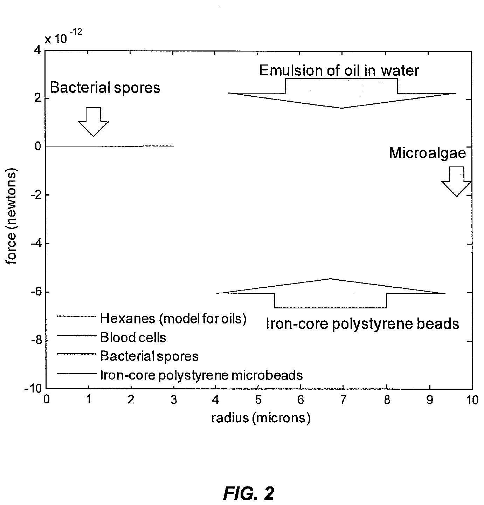

The acoustic radiation force ($F_{ac}$) acts on the secondary-phase particles (or fluid droplets), pushing them to the nodes (or antinodes) of the acoustic standing wave. The magnitude of the force depends on the particle density and compressibility relative to the fluid medium, and increases with the particle volume. Figure 2 illustrates the acoustic force that operates on four different secondary phases in water as a function of the particle (or droplet) radius. The four secondary phases are hexanes (a mixture of hydrocarbons, a model for oils), red blood cells (a model for biological cells), bacterial spores (a model for "large" protein clusters and polystyrene beads such as are used for flow cytometry), and paramagnetic polystyrene beads (used for various biological capture and separation protocols).

The graph of Figure 2 shows the forces for an applied acoustic frequency of 1 MHz (typical for an ultrasonic transducer) and an acoustic pressure of 0.5 MPa maximum at the antinodes (readily achieved in water). Achievement of higher applied acoustic frequencies and higher acoustic pressures will require better impedance matching, but will afford better separation of smaller particles--on the order of 10nm.

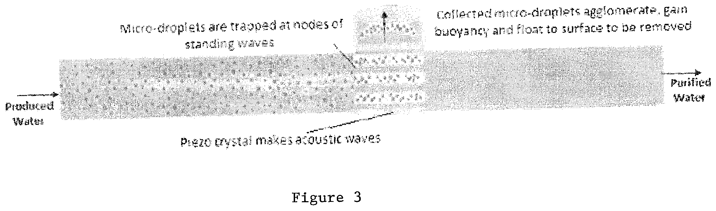

To concentrate and separate oils from water, a flow channel is used to flow the fluid dispersion, typically water and a secondary-phase component that is dispersed in the water. The secondary-phase component in this case is the oils of interest. An ultrasonic transducer is typically located in the wall of said flow channel. Piezoelectric transducers are often used. The transducer is driven by an oscillating voltage that has an oscillation at an ultrasonic frequency (Figure 3). The ultrasonic frequency is typically in the range of several MegaHertz and the voltage amplitude is on the order of tens of volts. The transducer, in combination with an acoustic reflection surface located at the wall of the flow tube opposite to the transducer, serves to generate an acoustic standing wave across the flow channel. Typical pressure amplitudes in the region of the acoustic standing wave or field are on the order of 0.5 MPa, amplitudes readily available with conventional piezoelectric transducers. The pressure amplitudes are below the cavitation threshold values so that a high intensity standing wave field is created without generation of cavitation effect or significant acoustic streaming.

Acoustic streaming refers to a time-averaged flow of the water produced by the sound field. Typically, when acoustic streaming is generated it results in circulatory motion that may cause stirring in the water. Cavitation typically occurs when there are gas bodies, such as air microbubbles, present in the water. The effect of the sound pressure is to create microbubble oscillations which lead to microstreaming and radiation forces. Micro-streaming around bubbles lead to shearing flow in the surround liquid. This flow contains significant velocity gradients. At higher sound intensity levels, the microbubble oscillations become more intense, and the bubble can collapse leading to shock wave generation and free radical production. This is termed inertial cavitation. Cavitation is to be strongly avoided for separation of oil from water, because the cavitation forces will actually emulsify the suspended oil thus making it more difficult to remove.

The acoustophoretic force created by the acoustic standing wave on the secondary phase component, i.e., the oil, is sufficient to overcome the fluid drag force. In other words, the acoustophoretic force acts as mechanism that traps the oil droplets and even microscale oil droplets in the acoustic field. The acoustophoretic force drives the oil droplets to the stable locations of maximum acoustophoretic force amplitudes. Over time the collection of oil grows steadily. Within minutes, depending on the concentration of the secondary phase component, the collection of oil takes on the shapes of a beam-like collection of oil consisting of disk-shaped collections of oil droplets, each disk spaced by a half wavelength of the acoustic field. These oil droplet clusters will coalesce by surface tension and float up from the stream. The beam of disk-shaped collections of oil droplets is stacked between the transducer and the opposing, acoustically-reflective flow-tube wall. Therefore, acoustophoretic forces are able to trap and concentrate oil droplets in the region of the acoustic field while the host medium continues to flow past the concentrated oil. The collection of oil can continue until very large volumes of the host medium has flowed through the trapping region and the capture of the containing oil has been attained.

Further separation of the concentrated oil from the host medium is achieved by two means. For a horizontal flow of the host medium, density differences of the water and now very large oil droplets with volumes on the order of 1-10 mL will naturally float upward into a collection region.

In a typical embodiment the acoustophoretic force created by the acoustic standing wave on the secondary phase component, i.e., the oil droplets, is sufficient to overcome the fluid drag force. In other words, the acoustophoretic force acts as mechanism that traps the oil droplets in the acoustic field. Within seconds, depending on the concentration, the oil droplets form beam-like striations consisting of disk-shaped aggregates of oil droplets, each disk spaced by a half wavelength of the acoustic field; the disks are stacked between the transducer and the acoustic reflector. As soon as the oil aggregates reach a critical volume, the buoyancy force that the aggregate experiences is sufficient to drive the aggregates to the top of the fluid layer. Therefore, the acoustophoretic force acts as a concentrator of the oil droplets, causing coalescence and agglomeration of the droplets, and turning them into large aggregates of oil droplets, at which points buoyancy forces the oil aggregates to rise. Over time, a steadily increasing layer of separated oil, i.e., lipids, is collected at the top of the flow chamber. Simple, conventional means can be envisioned to remove the oil layer.

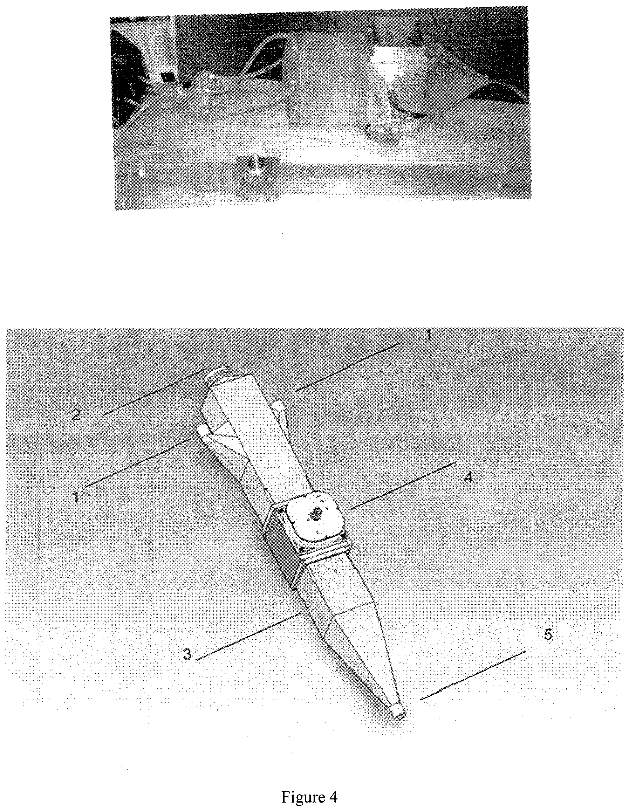

Figure 4 shows three prototype systems. The photo at the top, Figure 4a, with the large square cross section is a device capable of processing 3 gal/min of emulsified oil-water. The emulsion flows in at the left (bottom of the device, laying on its side); transducers on the side; oil is removed from the right (top of the device). The device shown in the bottom of the photo is designed for the emulsion to flow in at the left (bottom of the device, laying on its side); there are two separation regions where the oil travels in one and the pure water in the second. In the device shown in the bottom of Figure 4b the emulsion flows in on the left and separate oil and water channels are shown on the right of the device.

As a proof-of-concept demonstration was conducted that demonstrates the coalescence, aggregation, concentration and separation of oil droplets from a stable oil/water emulsion. An emulsion was created to simulate an emulsion of microalgae lipids in water. A stable emulsion was created using water, baby oil, and Ceteareth-20. A fluid-flow apparatus was then used to separate the components of the emulsion, resulting in an oil layer and a water layer that are separate from one another.

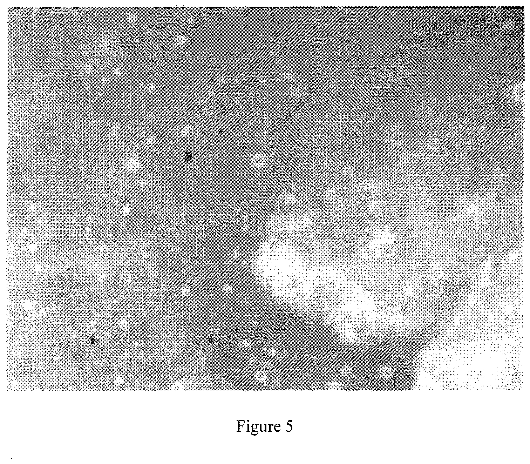

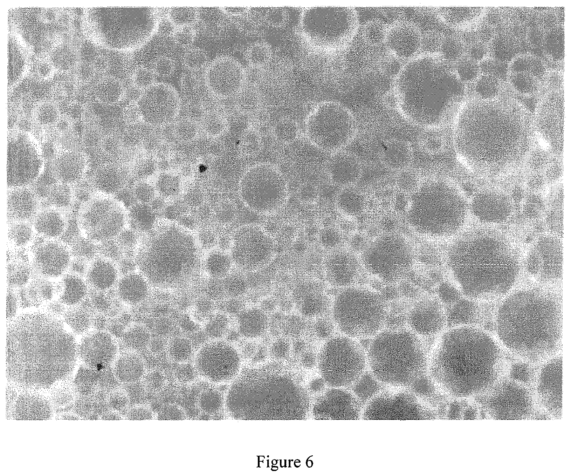

A stable emulsion was created from a mixture of four tablets of Ceteareth-20 (a common emulsifier), 400 mL of hot (180°F) water, and 10 ml of baby oil. A photo, taken at 400X magnification, of the stable emulsion is shown in Figure 5 and 6. The oil droplets in the stable emulsion ranged in diameters from about three to six.

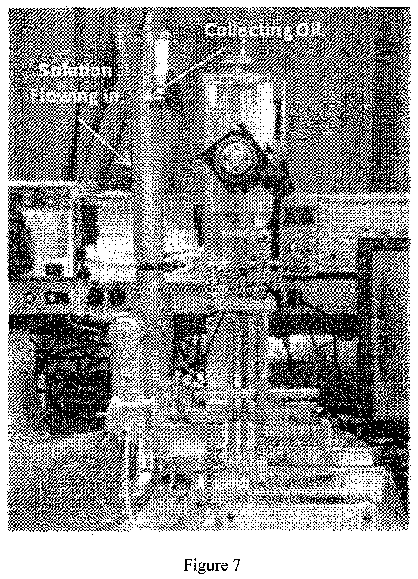

Next, a flow-through apparatus was used to concentrate and separate the oil phase from the emulsion. A photo of the apparatus is shown in Figure 7. The emulsion is flowing in a downward vertical direction. The acoustic field is perpendicular to the flow field, and acoustophoresis is used to trap the oil particles.

The transducer was a 2 MHz PZT-4 transducer, operating at 2 MHz and an applied voltage about 15 Vrms. The flow rate of the emulsion through the flow apparatus was on the order of 200 ml/min. After a typical trapping time of five minutes the fluid flow was stopped and the height of the oil layer that had been collected at the top of the chamber was measured.

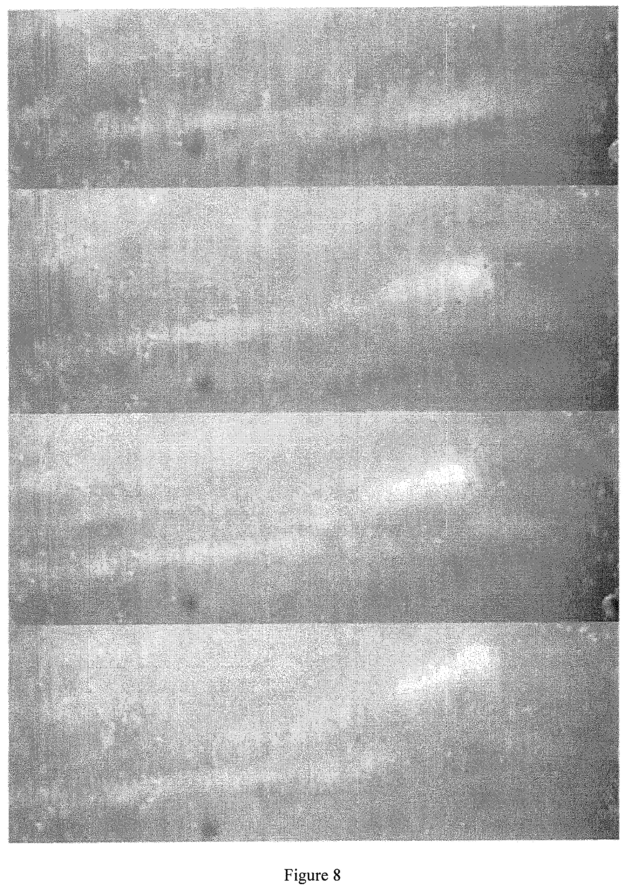

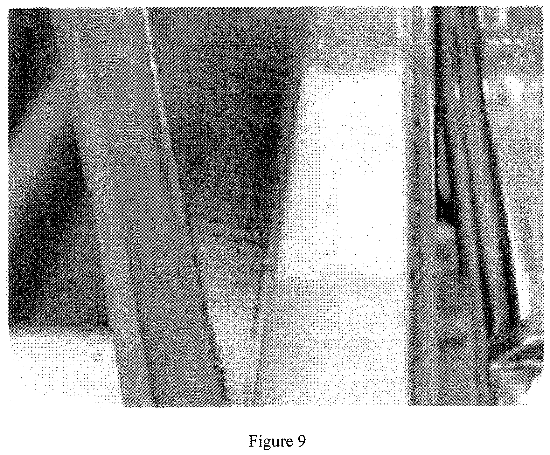

Figure 8 shows the formation of oil droplets trapped in the acoustic field. Once the oil droplets are trapped, they coalesce to form bigger droplets, and agglomerate to form aggregates of the droplets. Once the aggregates have grown to a sufficient size, their buoyancy force drives the oil droplet aggregates to the surface of the chamber. Continuous formation of oil droplet aggregates is observed, followed by the rapid translation of the aggregates as a result of buoyancy. A second observation indicating rapid separation of the oil droplets from the water is from the visual observation of a cloudy solution above the transducer, i.e., where the unprocessed emulsion has not yet passed through the acoustic field, but of a very clear solution below the transducer, where the oil has been removed by the acoustic field. These regions above and below the acoustic trapping region are separated by a sharp line between the cloudy solution and clear solution. After about 5 minutes of application of an acoustic trapping field while flowing the emulsion, a layer of collected oil droplets is observed at the top of the chamber, as shown in Figure 9.

An acoustophoretic separator can be created in some implementations using a piezoelectric acoustic transducer and an opposing reflection surface (or a second transducer) to set up a resonant standing wave in the fluid of interest. The ultrasonic standing waves create localized regions of high and low pressure, corresponding to high and low density of the fluid. Secondary phase contaminants are pushed to the standing wave nodes or antinodes depending on their compressibility and density relative to the surrounding fluid. Particles of higher density and compressibility (e.g., bacterial spores) move to the nodes in the standing waves while secondary phases of lower density (such as oils) move to the antinodes. The force exerted on the particles also depends on their size, with larger particles experiencing larger forces.

The acoustic radiation force ($F_{ac}$) acts on the secondary-phase particles, pushing them to the nodes (or antinodes) of the acoustic standing wave. The magnitude of the force depends on the particle density and compressibility relative to the fluid medium, and increases with the particle volume.

The acoustic pressures of the standing wave can separate low-density oil droplets and higher density particles, such as metal oxides (in the size range of 0.2 microns to 100 microns). FIG. 2 shows a chart illustrating the acoustic force that operates on four different secondary phases in water as a function of the particle (or droplet) radius. The four secondary phases are hexanes (a mixture of hydrocarbons, a model for oils, represented by line at the top of the graph), red blood cells (a model for biological cells) and bacterial spores both of which are represented by the lines in the center of the graph, and paramagnetic polystyrene beads (examples of particles with density and size similar to metal oxide particles represented by the line at the bottom of the graph). The forces for an applied acoustic frequency of 1 MHz (typical for an ultrasonic transducer) and an acoustic pressure of 0.5 MPa maximum at the antinodes (readily achieved in water) are shown in FIG. 2.

In one implementation that can be used to concentrate and separate oil from water, a flow channel can be used to direct flow of fluid dispersion, typically water and a secondary-phase component that is dispersed in the water. The secondary-phase component in one example may contain oil. An ultrasonic transducer, which in some implementations can be a piezoelectric transducer, can be located in the wall of the flow channel. The transducer can be driven by an oscillating voltage that has an oscillation at an ultrasonic frequency that can in some implementations be in a range of several Megahertz. The voltage amplitude can be between 1 and 100 volts. The transducer, in combination with an acoustic reflection surface located at the wall of the flow tube opposite to the transducer, can generate an acoustic standing wave across the flow channel. Typical pressure amplitudes in the region of the acoustic standing wave or field can be on the order of 0.5 MPa. Such amplitudes are readily available with piezoelectric transducers. This pressure can be high enough to crush and destroy organisms above 10 microns.

The pressure amplitudes for this acoustophoresis process can, in some implementations, advantageously be maintained below the cavitation threshold values so that a high intensity standing wave field can be created without generation of cavitation effect or significant acoustic streaming. Acoustic streaming refers to a time-averaged flow of the water produced by the sound field. Typically, when acoustic streaming is generated it results in circulatory motion that can cause stirring in the water. Cavitation typically occurs when there are gas bodies, such as air microbubbles, present in the water. The effect of the sound pressure is to create microbubble oscillations which lead to microstreaming and radiation forces. Micro-streaming around bubbles lead to shearing flow in the surrounding liquid. This flow contains significant velocity gradients. At higher sound intensity levels, the microbubble oscillations can become more intense, and the bubble can collapse leading to shock wave generation and free radical production. This is termed inertial cavitation. In some alternative implementations, a pre-treatment step in which cavitation is induced can be used to damage or at least partially destroy suspended biological contaminants. Following a region of the flow path where cavitation is induced, acoustophoresis as described herein can be used to agglomerate suspended material and also to cause damage to smaller suspended pathogens that might not be affects by the larger scale forces of a cavitation environment.

The acoustophoretic force created by the acoustic standing wave on the secondary phase component, such as for example oil, can be sufficient to overcome the fluid drag force exerted by the moving fluid on these particles/droplets. In other words, the acoustophoretic force can act as a mechanism that traps the oil droplets in the acoustic field. The acoustophoretic force can drive the suspended particles to the stable locations of minimum acoustophoretic force amplitudes. These locations of minimum acoustophoretic force amplitudes can be the nodes of a standing acoustic wave. Over time, the collection of oil droplets/particulates/gases at the nodes grows steadily. Within some period of time, which can be minutes or less depending on the concentration of the secondary phase component, the collection of oil droplets/particulates/gases can assume the shape of a beam-like collection of oil droplets/particulates/gases with disk-shaped collections of oil droplets/particulates/gases. Each disk can be spaced by a half wavelength of the acoustic field. The beam of disk-shaped collections of oil droplets/particulates/gases can be "stacked" between the transducer and the opposing, acoustically-reflective flow-tube wall. In this manner, acoustophoretic forces can trap and concentrate oil droplets/particulates/gases in the region of the acoustic field while the host medium continues to flow past the concentrated oil droplets/particulates/gases.

The process of collecting oil droplets/particulates/gases can continue until very large volumes of the host medium have flowed through the trapping region and the capture of the containing oil droplets/particulates/gases has been attained. Further separation of the concentrated oil droplets/particulates/gases from the host medium can be achieved by one or more methods.

For a horizontal flow of the host medium, gravitational settling can be used to drive the concentrated oil droplets/particulates/gases into collector pockets, if the oil droplets/particulates/gases have a greater density than the host fluid. If the oil droplets/particulates/gases are less dense than the host fluid, the concentrated oil droplets/particulates/gases will gain buoyancy and float. For vertical or horizontal flow of the host medium, a slow frequency sweeping method can be used to translate the oil droplets/particulates/gases into collector pockets. In this method, the frequency of the acoustic standing wave can be slowly swept over a small frequency range spanning at least a range of two times the frequency corresponding to the lowest-order standing wave mode of the cavity. The sweep period can be, in one example, on the order of one second. This frequency sweeping method can slowly translate the collected oil droplets/particulates/gases in the direction of the acoustic field towards one of the walls of the flow chamber where the oil droplets/particulates/gases can be collected for further processing.

In an alternative implementation, the piezoelectric transducer can be driven by a pulsed voltage signal that includes short-duration, large, positive-amplitude voltage spikes, followed by a longer duration of no applied voltage signal. This pulsed pattern can be repeated according to a repetition rate or period. This excitation can generate very large amplitude compressive pressure pulses in water.

In another implementation, a piezoelectric transducer can be driven by a pulsed voltage signal that includes short-duration, large, negative-amplitude voltage spikes, followed by a longer duration of no applied voltage signal. This pulsed pattern can be repeated according to a repetition rate or period. This excitation can generate very large amplitude expansion-type pressure pulses in water prior to acoustophoresis collection.

The system used in the invention can provide large-scale acoustophoretic technology to collect and process oil droplets/particulates/gases contaminated water to reduce or eliminate their presence in the water. In an implementation, this effect can be accomplished using a simple one-step process involving acoustophoresis which collects and suspends particles to acoustic pressure nodes where they accumulate and agglomerate such that gravitational or other processes (e.g., buoyancy) can effectively remove finally dropping into a collection port for removal. The process can be applied in either batch or continuous flow reactor configurations. The current subject matter can also be used to collect, remove, etc. oil droplets/particulates/gases form water to purify water, for example drinking water.

In one implementation of the invention, a system used for concentrating and separating particles/droplets from a host medium such as water includes a flow chamber with an inlet and outlet. The flow direction can in some variations be oriented in a horizontal direction. The flow chamber can receive a mixture of water including a suspended phase that can include contaminating particles/droplets. The flow chamber can have macro-scale dimensions. In other words, the dimensions of the cross-section of the flow chamber are much larger than the wavelength corresponding to the generated sound. The system also includes an ultrasonic transducer that is embedded in a wall of the flow chamber or located outside of the flow chamber. The ultrasonic transducer can include a piezo-electric material and can be driven by an oscillating voltage signal of ultrasonic frequencies. Ultrasonic transducers other than piezoelectric transducers can be used.

The ultrasonic frequencies can be in the range from 1 kHz to 100 MHz, with amplitudes of 1-100 of volts, normally acting in the tens of volts. The ultrasonic frequencies can be between 200 kHz and 3 MHz. The ultrasonic frequencies can be between 1 and 3 MHz. The ultrasonic frequencies can be 200, 400, 800, 1000 or 1200 kHz. The ultrasonic frequencies can be between 1 and 5 MHz. A reflector is located opposite to the transducer, such that an acoustic standing wave is generated in the host medium. The acoustic standing wave is oriented perpendicularly to the direction of the mean flow in the flow channel. In some implementations, the acoustic standing wave can be oriented vertically for a horizontal fluid flow direction. The acoustic field exerts an acoustic radiation force, which is referred to as an acoustophoretic force, on the partiuclates. The particulates can be trapped in the acoustic field against the fluid drag force, thereby resulting in large scale collection of the particulates. Switching off the water flow through the flow chamber can result in gravitational settling of the collected particles to the bottom of the flow chamber or result in the particles gaining buoyancy and floating to the top for easy removal.

. The system is driven with a frequency sweep pattern or step pattern. The effect of the frequency sweeping or stepping is to translate the collected particles along the direction of the acoustic standing wave to either the transducer face or to the opposite reflector face. A collection pocket or other void volume is positioned opposite to the transducer such that settled particles are collected in the collection pocket. The collection pocket includes one or more butterfly valves for removing a slurry containing water with a high suspended phase concentration from the flow chamber. In this manner, after the suspended phase settles into the collection pocket, the settled/floating suspended materials are removed from the flowing water stream.

The flow direction of a system can be oriented in a direction other than horizontal. For example, the fluid flow can be vertical either upward or downward or at some angle relative to vertical or horizontal. The position of the acoustic transducer is chosen so that the acoustic field is in a direction such that the translation of particles into a collection pocket is achieved by a frequency sweeping or stepping method. More than one transducer can be included in the system. For example, each further transducer can have its own reflector and can include a collector pocket that can further include a mechanism for removing concentrated slurry of suspended phase material form the water flow. A set of systems can have each system's transducer set at different frequencies can be used to efficiently concentrate and/or remove suspended material such as particles and similar density particles having a range of sizes and densities from a flowing liquid medium.

Acoustic systems can also be serially connected with different resonant transducers for greater particle/organism capture efficiency. The system can include a series of individual units. Individual transducers or arrays of transducers are tuned to allow different acoustic frequencies to capture different ranges of particle/organism sizes.

The system may include cells operating at 200 kHz, 400 kHz, 600 kHz, 800 kHz, 1000 kHz and 1200 kHz. Each cell may be optimized for a specific range of particle size and density. The overall system may be capable of processing 0.378 to 378.54 l/min (0.1 to 100 gal/min) of water (e.g., 0.378 to 189.27 l/min (0.1 to 50 gal/min), 0.378 to 75.71 l/min (0.1 to 20 gal/min), 0.378 to 37.85 l/min (0.1 to 10 gal/min), 3.78 to 37.85 l/min (1 to 10 gal/min), 3.78 to 75.71 l/min (1 to 20 gal/min), 3.78 to 189.27 l/min (1 to 50 gal/min), 3.78 to 378.54 l/min (1 to 100 gal/min)). Parallel or serial arrays similar to that shown can be constructed to process a variety of volumetric flow rates.

Aspects of the current subject matter described may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

## REFERENCES

1) B. Lipkens, J. Dionne, A. Trask, B. Szczur, A. Stevens, E. Rietman, "Separation of micron-sized particles in macro-scale cavities by ultrasonic standing waves," Presented at the International Congress on Ultrasonics, Santiago, January 1 1 - 17,2009

2) B. Lipkens, M. Costolo, and E. Rietman , "The effect of frequency sweeping and fluid flow on particle trajectories in ultrasonic standing waves", IEEE Sensors Journal, Vol. 8, No. 6, pp. 667-677, 2008.

3) B. Lipkens, J. Dionne, M. Costolo, and E. Rietman, "Frequency sweeping and fluid flow effects on particle trajectories in ultrasonic standing waves," Acoustics 08, Paris, June 29 - July 4, 2008.

4) B. Lipkens, J. Dionne, A. Trask, B. Szczur, and E. Rietman, "Prediction and measurement of particle velocities in ultrasonic standing waves," J. Acoust. Soc. Am. 124, No. 4, pp. 2492 (A) 2008.

5) L. P. Gor'kov, "On the forces acting on a small particle in an acoustical field in an ideal fluid," Soy. Phys. Dokl., vol. 6, pp. 773-775, 1962.

## Claims

1.  A use of a system to concentrate and separate particulates from a mixture of a host medium and particulates, the system comprising:

    a flow chamber through which the mixture flows, the flow chamber comprising one or more flow inlets and flow outlets, wherein the dimensions of the cross-section of the flow chamber are larger than the wavelength corresponding to the generated sound;
    an ultrasonic transducer in a wall of the flow chamber or located outside of the flow chamber and a reflector located opposite the ultrasonic transducer, wherein the ultrasonic transducer is configured to be driven by an oscillating voltage signal of ultrasonic frequencies with a frequency sweep pattern or step pattern to translate the particulates into a collection pocket and to generate an acoustic standing wave in the host medium perpendicular to a direction of mean flow in the flow chamber; and

the collection pocket positioned on the wall of the flow chamber opposite the ultrasonic transducer, wherein the collection pocket has one or more butterfly valves for removing a slurry containing the host medium with a high particulate concentration from the flow chamber;

wherein the system is configured so that an acoustic field exerts an acoustophoretic force on the particulates, such that the particulates are trapped in the acoustic field against the host medium drag force, resulting in large scale collection of the particulate over time.

2.	The use according to claim 1, wherein the system is driven by any type of ultrasonic transducer, other than a piezoelectric transducer.

3.	The use according to claim 1 wherein the flow chamber of the system is oriented in a vertical direction.

4.	The use according to claim 1 wherein the ultrasonic transducer of the system is driven by an oscillating voltage signal of ultrasonic frequencies in the range of hundred thousand to several million cycles per second, with amplitudes of tens of volts.

5.	The use according to claim 1 wherein the ultrasonic transducer of the system is made of a piezo-electric material.

6.	The use according to claim 1 wherein walls are not placed around the transducer element of the system in a manner to minimize streaming.

7.	The use according to claim 1, wherein the dimensions of the cross-section of the flow chamber of the system are 2 times, 4 times, 5 times, 10 times, 20 times, 50 times or 100 times larger than the wavelength corresponding to the generated sound.

8.	The use according to claim 1, wherein the flow chamber of the system is oriented in a horizontal direction and gravitational settling or buoyancy is used to drive the collected particulate into the collection pocket.


**Patentansprüche**

1.	Verwendung eines Systems zum Konzentrieren und Abtrennen von Partikeln aus einem Gemisch aus einem Wirtsmedium und Partikeln, wobei das System umfasst:

eine Strömungskammer, durch die das Gemisch strömt, wobei die Strömungskammer einen oder mehrere Strömungseinlässe und Strömungsauslässe umfasst, wobei die Abmessungen des Querschnitts der Strömungskammer größer sind als die Wellenlänge, die dem erzeugten Schall entspricht;

einen Ultraschallwandler in einer Wand der Strömungskammer oder außerhalb der Strömungskammer angeordnet und einen Reflektor, der gegenüber dem Ultraschallwandler angeordnet ist, wobei der Ultraschallwandler eingerichtet ist, durch ein oszillierendes Spannungssignal von Ultraschallfrequenzen mit einem Frequenzdurchlaufmuster oder einem Stufenmuster angesteuert zu werden, um die Partikel in eine Sammeltasche zu überführen und eine akustische stehende Welle in dem Wirtsmedium senkrecht zu einer Richtung der mittleren Strömung in der Strömungskammer zu erzeugen; und

die Sammeltasche, die an der Wand der Strömungskammer gegenüber dem Ultraschallwandler positioniert ist, wobei die Sammeltasche ein oder mehrere Schmetterlingsventile zum Entfernen einer Aufschlämmung, die das Wirtsmedium mit einer hohen Partikelkonzentration enthält, aus der Strömungskammer aufweist;

wobei das System so eingerichtet ist, dass ein akustisches Feld eine akoustophoretische Kraft auf die Partikel ausübt, so dass die Partikel in dem akustischen Feld gegen die Widerstandskraft des Wirtsmediums eingefangen werden, was mit der Zeit zu einer umfangreichen Ansammlung der Partikel führt.

2.	Verwendung nach Anspruch 1, wobei das System durch eine beliebige Art von Ultraschallwandler angesteuert wird mit Ausnahme eines piezoelektrischen Wandlers.

3.	Verwendung nach Anspruch 1, wobei die Strömungskammer des Systems in vertikaler Richtung ausgerichtet ist.

4.	Verwendung nach Anspruch 1, wobei der Ultraschallwandler des Systems durch ein oszillierendes Spannungssignal mit Ultraschallfrequenzen im Bereich von hunderttausend bis zu mehreren Millionen Zyklen pro Sekunde mit Amplituden von mehreren zehn Volt angesteuert wird.

5. Verwendung nach Anspruch 1, wobei der Ultraschallwandler des Systems aus einem piezoelektrischen Material hergestellt ist.

6. Verwendung nach Anspruch 1, wobei keine Wände um das Wandlerelement des Systems herum angeordnet sind, so dass die Strömung minimiert wird.

7. Verwendung nach Anspruch 1, wobei die Abmessungen des Querschnitts der Strömungskammer des Systems 2-mal, 4-mal, 5-mal, 10-mal, 20-mal, 50-mal oder 100-mal größer sind als die Wellenlänge, die dem erzeugten Schall entspricht.

8. Verwendung nach Anspruch 1, wobei die Strömungskammer des Systems in einer horizontalen Richtung ausgerichtet ist und Gravitationsabsetzung oder Auftrieb genutzt wird, um die gesammelten Partikel in die Sammeltasche zu treiben.

**Revendications**

1. Utilisation d'un système destiné à concentrer et à séparer des particules d'un mélange d'un milieu hôte et de particules, le système comprenant :

une chambre de flux à travers laquelle circule le mélange, la chambre de flux comprenant une ou plusieurs entrées de flux et sorties de flux, où les dimensions de la section transversale de la chambre de flux sont plus grandes que la longueur d'onde correspondant au son généré ;
un transducteur ultrasonore dans une paroi de la chambre de flux, ou situé à l'extérieur de la chambre de flux, et un réflecteur situé à l'opposé du transducteur ultrasonore, où le transducteur ultrasonore est configuré pour être commandé par un signal de tension oscillant de fréquences ultrasonores, avec un motif de balayage de fréquence ou un motif de pas afin de translater les particules dans une poche de collecte, et générer une onde stationnaire acoustique dans le milieu hôte perpendiculaire à la direction du flux moyen dans la chambre de flux ; et
la poche de collecte positionnée sur la paroi de la chambre de flux à l'opposé du transducteur ultrasonore, où la poche de collecte présente une ou plusieurs soupapes à papillon destinées à retirer de la chambre de flux une boue contenant le milieu hôte avec une concentration élevée en particules ;
où le système est configuré de telle sorte qu'un champ acoustique exerce une force acoustophorétique sur les particules, afin que les particules soient piégées dans le champ acoustique face à la force de traînée du milieu hôte, ce qui se traduit par une collecte à grande échelle des particules au fil du temps.

2. Utilisation selon la revendication 1, où le système est commandé par n'importe quel type de transducteur ultrasonore, autre qu'un transducteur piézoélectrique.

3. Utilisation selon la revendication 1, où la chambre de flux du système est orientée dans une direction verticale.

4. Utilisation selon la revendication 1, où le transducteur ultrasonore du système est commandé par un signal de tension oscillant de fréquences ultrasonores de l'ordre de centaines de milliers à plusieurs millions de cycles par seconde, avec des amplitudes de dizaines de volts.

5. Utilisation selon la revendication 1, où le transducteur ultrasonore du système est réalisé dans un matériau piézoélectrique.

6. Utilisation selon la revendication 1, où les parois ne sont pas placées autour de l'élément transducteur du système afin de réduire au minimum un effet de canalisation.

7. Utilisation selon la revendication 1, où les dimensions de la section transversale de la chambre de flux du système, sont 2 fois, 4 fois, 5 fois, 10 fois, 20 fois, 50 fois ou 100 fois plus grandes que la longueur d'onde correspondant au son généré.

8. Utilisation selon la revendication 1, où la chambre de flux du système est orientée dans une direction horizontale, et un agencement gravitationnel ou une flottabilité est utilisée afin d'entraîner les particules collectées dans la poche de collecte.

Figure 1

*FIG. 2*

Figure 3

Produced Water

Purified Water

Piezo crystal makes acoustic waves

Micro-droplets are trapped at nodes of standing waves

collected micro-droplets agglomerate, gain buoyancy and float to surface to be removed

Figure 4

Figure 5

Figure 6

Figure 7

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03102737 A3

**Non-patent literature cited in the description**

- **B. LIPKENS ; J. DIONNE ; A. TRASK ; B. SZCZUR ; A. STEVENS ; E. RIETMAN.** Separation of micron-sized particles in macro-scale cavities by ultrasonic standing waves. Presented at the International Congress on Ultrasonics, 11 January 2009
- **B. LIPKENS ; M. COSTOLO ; E. RIETMAN.** The effect of frequency sweeping and fluid flow on particle trajectories in ultrasonic standing waves. *IEEE Sensors Journal,* 2008, vol. 8 (6), 667-677

- **B. LIPKENS ; J. DIONNE ; M. COSTOLO ; E. RIETMAN.** *Frequency sweeping and fluid flow effects on particle trajectories in ultrasonic standing waves,* 29 June 2008
- **B. LIPKENS ; J. DIONNE ; A. TRASK ; B. SZCZUR ; E. RIETMAN.** Prediction and measurement of particle velocities in ultrasonic standing waves. *J. Acoust. Soc. Am.,* 2008, vol. 124 (4), 2492
- **L. P. GOR'KOV.** On the forces acting on a small particle in an acoustical field in an ideal fluid. *Soy. Phys. Dokl.,* 1962, vol. 6, 773-775